# EUROPEAN PATENT SPECIFICATION

(11) **EP 0 339 511 B1**
(45) Date of publication and mention of the grant of the patent: **01.09.1993**
(21) Application number: 89107254.8
(22) Date of filing: 21.04.1989
(51) Int. Cl.: B60C 15/06, B60C 15/00

(54) **Radial tyre for motor vehicles**
Gürtelreifen für Fahrzeuge
Pneumatique radial pour véhicules à moteur

(30) Priority: 27.04.1988 IT 6738588
(43) Date of publication of application: 02.11.1989
(73) Proprietor: BRIDGESTONE/FIRESTONE, INC., Akron, Ohio 44317 (US)
(72) Inventor: Lesti, Franco, I-00153 Roma (IT); Carpentier, Jean M., F-62700 Labuissière (FR)
(74) Representative: Jorio, Paolo

(56) References cited:
- EP-A- 0 000 458
- DE-A- 1 505 148
- GB-A- 2 005 201
- LU-A- 86 479
- PATENT ABSTRACTS OF JAPAN vol. 10, no. 323 (M-531)(2379) 05 November 1986, & JP-A-61 129305 (YOKOHAMA RUBBER CO LTD) 17 June 1986,

## Description

The present invention relates to a radial tyre for motor vehicles.

Radial tyres for motor vehicles are generally known to present, along the inner periphery, two metal beads, each fitted, along the outer periphery, with an elastomeric filler usually in the form of a substantially triangular-section wing. Each bead and respective filler are covered by a respective lateral portion of a body ply, the end portion of which is joined to the outer surface of a centre portion of the body ply over the outer end of the filler. The inner and outer surfaces of the package so formed are usually covered with an innerliner and abrasion strip respectively. The said innerliner and abrasion strip are integral with each other, usually of substantially constant thickness, and turned about a respective said lateral portion of the body ply.

The said fillers were not usually featured on diagonal tyres, the required lateral rigidity of which was provided for by a number of diagonal cross plies. As these are absent on radial tyres, however, the said fillers have always been considered, in the past, essential for ensuring sufficient lateral rigidity.

The presence of the above fillers, however, involve a number of drawbacks both in terms of design and cost.

A first of the above drawbacks is due to the fact that the presence of the fillers requires the use of extremely wide body plies, each turned-up lateral portion of which must be long enough to cover the surface of the filler facing outwards of the tyre, and also join up with the outer surface of the centre portion of the body ply.

In order to overcome the above drawback, an improved tyre, disclosed in DE-A- 1505148, was proposed, in which each bead is provided with a relatively short filler, thus enabling the use of a body ply having relatively short turned-up portions. Of course, the rigidity of the above shorter fillers had to be increased, and the above turned-up portions, that is the abrasion strips, had to be made thicker than before in order to compensate for the absence of longer fillers.

A second of the above drawbacks is due to the fact that the presence, in a tyre, of a bead-bead filler assembly requires the use of a preassembly line, parallel with the tyre assembly line, for forming and preassembling the metal beads and the relevant fillers, which are then fed on to the tyre assembly line.

In order to overcome both the above first and second drawbacks, an improved tyre, disclosed in LU-A-86479, was proposed, in which the body ply is turned up straight in contact with the bead, so as to make the turned-up portions of the body ply very short, each filler is separate from the relevant bead, and is arranged outside the relevant turned-up portion of the body-ply, and the turned-up portions, that is the abrasion strips, are of substantially constant thickness.

However, none of the above two improved known tyres, owing to their including a bead filler, either rigid with or independent of the relevant bead, could avoid the major drawback stemming from the presence of a filler itself; such presence, owing to the mix of the filler being obviously different from that of the surrounding parts, results in poorly homogeneous bead area and, consequently, in inevitable curing problems.

Despite the rubber industry now being in a position to overcome problems of this sort, even the slightest variation in the mix of any of the components in the bead area of a radial tyre inevitably means varying the mix of all component parts involved, for ensuring curing is performed as homogeneously as possible.

Notwithstanding the above precautions, however, the bead areas of radial tyres are still considered "critical" by manufacturers, due to the severe stress they are subjected to, and the presence of a number of superimposed unhomogeneous layers bonded together.

It is the object of the present invention to provide a radial tyre overcoming all the drawbacks listed above.

According to the present invention there is provided a radial tyre for motor vehicles, the tyre comprising two metal beads; a body ply comprising two lateral portions, each turned about a respective said bead and joined, by an end portion, to the outer surface of the centre portion of the body ply over the respective said bead; an innerliner and an outer abrasion strip integral with each other, and turned about each said lateral portion of the body ply; each said lateral portion of the body ply being turned substantially 360° about a respective said bead; the end portion of each said lateral portion of the body ply joining with the centre portion of the body ply immediately over the respective bead; and each abrasion strip comprising a second portion extending outwards of the respective bead and having a section varying in thickness, so as to compensate for the absence of a bead filler, characterized in that said second portion of the abrasion strip is arranged in direct contact with the respective lateral portion of the body ply.

The invention will be described by way of example with reference to the accompanying drawings, in which:
Fig. 1 shows a partial cross section of a known tyre;
Fig.2 shows a partial cross section of a preferred embodiment of the radial tyre according to the present invention.

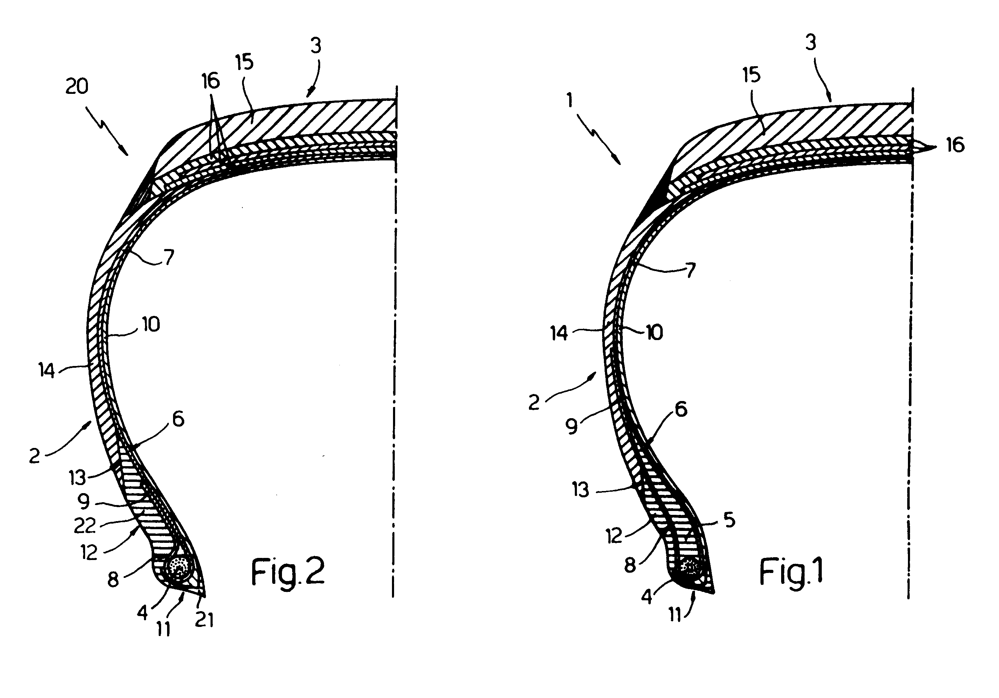

Number 1 in Fig.1 indicates a known radial tyre comprising an inner radial carcass 2 and an outer carcass 3.

Along the inner periphery of carcass 2, there are provided two metal beads 4 (only one of which is shown), each fitted along its outer periphery with a substantially triangular filler 5 extending from bead 4 in the direction of outer carcass 3.

Inner carcass 2 also comprises a body ply 6 having a centre portion 7 extending between beads 4, and two lateral portions 8, each turned about a respective bead 4. Each lateral portion 8 consists of a first portion covering part of bead 4 and the surface of respective filler 5 facing outwards of tyre 1; and an end portion 9 extending beyond respective filler 5 and joining with the outer surface of centre portion 7.

Inner carcass 2 also comprises a cover layer consisting of an innerliner 10 of substantially constant thickness, each lateral edge of which is connected, via a first splice 11, to the inner lateral edge of an abrasion strip 12 of substantially constant thickness, and the outer lateral edge of which is connected, via a second splice 13, to the inner edge of a sidewall 14 also of substantially constant thickness.

In more detail, innerliner 10 covers the entire inner surface of centre portion 7 of body ply 6, and is turned partially in the form of a U about each bead 4 at splice 11, whereas abrasion strips 12 and sidewalls 14 cover the outer lateral surfaces of tyre 1. Naturally, each abrasion strip 12 is also turned substantially in the form of a U about respective bead 4 at splice 11.

The outer lateral edge of each sidewall 14 blends with a respective lateral edge of carcass 3, which comprises a tread 15 reinforced internally by tread plies 16.

Fig.2 shows a radial tyre 20 constituting a preferred embodiment of the present invention, and the corresponding component parts of which are numbered as on tyre 1.

The first noticeable difference between tyres 1 and 20 is that, on tyre 20, filler 5 has been dispensed with, and each lateral portion 8 of body ply 6 is turned substantially 360° about respective bead 4 and joined by end portion 9 to centre portion 7 immediately outwards of bead 4.

Consequently, whereas end portions 9 of tyres 1 and 20 present substantially the same width, the total width of lateral portion 8 of body ply 6 on tyre 20 is far less than on tyre 1.

Also, the bead area of tyre 20 is far more homogeneous than on tyre 1, and, by virtue of centre portion 7 and each lateral portion 8 of body ply 6 being formed from the same material, lateral portions 8 of body ply 6 on tyre 20 knit perfectly with centre portion 7 during curing, to form a single body enclosing bead 4.

A further difference between tyres 1 and 20 is that, whereas innerliners 10 of tyres 1 and 20 are of substantially constant thickness, like abrasion strip 12 on tyre 1, abrasion strip 12 on tyre 20 presents a section of varying thickness and generally thicker than that of strip 12 on tyre 1, so as to compensate for the absence of filler 5.

In more detail, each abrasion strip 12 comprises a first and second portion, 21 and 22, the average thickness of the first being less than that of the second. The said portion 21 is turned substantially in the form of a U about respective bead 4, and is superimposed on a corresponding portion of innerliner 10; whereas portion 22 extends outwards of respective bead 4 and in contact with respective end portion 9 of body ply 6.

Tests conducted on radial tyres formed as in Fig.2 have shown that the increased thickness of abrasion strip 12 and improved mechanical connection of the components in the bead area of tyre 20 provide for at least the same transverse rigidity as on conventional tyre 1.

In other words, therefore, tyre 20 not only provides for overcoming the drawbacks associated with fillers 5 on tyre 1 but, for a given tyre size, also enables the use of narrower innerliners 10, thus reducing both cost and, above all, weight.

## Claims

1. A radial tyre (20) for motor vehicles, the tyre (20) comprising two metal beads (4); a body ply (6) comprising two lateral portions (8), each turned about a respective said bead (4) and joined, by an end portion (9), to the outer surface of the centre portion (7) of the body ply (6) over the respective said bead (4); an innerliner (10) and an outer abrasion strip (12) integral with each other, and turned about each said lateral portion (8) of the body ply (6); each said lateral portion (8) of the body ply (6) being turned substantially 360° about a respective said bead (4); the end portion (9) of each said lateral portion (8) of the body ply (6) joining with the centre portion (7) of the body ply (6) immediately over the respective bead (4); and each abrasion strip (12) comprising a second portion (22) extending outwards of the respective bead (4) and having a section varying in thickness, so as to compensate for the absence of a bead filler, characterized in that said second portion (22) of the abrasion strip (12) is arranged in direct contact with the respective lateral portion (8) of the body ply (6).

2. A tyre as claimed in Claim 1, characterised in that each abrasion strip (12) further comprises a first portion (21) having an average thickness less than that of said second portion (22); the first portion (21) of each abrasion strip (12) being turned substantially in the form of a U about the respective bead (4).

3. A tyre as claimed in Claim 2, characterised in that the first portion (21) of each abrasion strip (12) is superimposed on a corresponding portion of the innerliner (10).

## Patentansprüche

1. Radial-Gürtelreifen (20) für Kraftfahrzeuge, bei dem der Reifen (20) zwei Metallwulste (4); eine Unterbaulage (6) mit zwei seitlichen Teilen (8) umfaßt, von denen jede um den entsprechenden Wulst (4) gewickelt und durch einen Endteil (9) mit der Außenfläche des mittigen Teils (7) der Unterbaulage (6) über den entsprechenden Wulst verbunden ist, sowie einen Innerliner bzw. Futter (10) und einem damit integrierten äußeren Abriebstreifen (12), die um den seitlichen Teil (8) der Unterbaulage (6) gewickelt sind, wobei jeder seitliche Teil (8) der Unterbaulage (6) im wesentlichen um 360° um den entsprechenden Wulst (4) gewickelt ist, und wobei der Endteil (9) jedes seitlichen Teils (8) der Unterbaulage (6) den mittigen Teil (7) der Unterbaulage (6) unmittelbar über dem entsprechenden Wulst (4) trifft, und wobei jeder Abriebstreifen (12) einen zweiten Teil (22) umfaßt, der sich vom entsprechenden Wulst (4) nach außen erstreckt und einen Abschnitt sich verändernder Dicke besitzt, um das Fehlen eines Wulstfüllers zu kompensieren, dadurch gekennzeichnet, daß der zweite Teil (22) des Abriebstreifens (12) in direktem Kontakt zum entsprechenden seitlichen Teil (8) der Unterbaulage (6) angeordnet ist.

2. Reifen nach Anspruch 1, dadurch gekennzeichnet, daß jeder Abriebstreifen (12) ferner einen ersten Teil (21) besitzt, dessen durchschnittliche Dicke geringer ist als die des zweiten Teiles (22), wobei der erste Teil (21) jedes Abriebstreifens (12) im wesentlichen in U-Form um den entsprechenden Wulst (4) herumgewickelt ist.

3. Reifen nach Anspruch 2, dadurch gekennzeichnet, daß der erste Teil (21) jedes Abriebstreifens (12) über einen entsprechenden Teil des Innerliners bzw. Futters (10) gelegt ist.

## Revendications

1. Pneumatique radial (20) pour véhicules à moteur, le pneumatique (20) comportant deux talons métalliques (4) ; un pli de corps (6) comportant deux parties latérales (8) rabattues chacune autour d'un talon respectif (4) et reliées chacune, par une partie extrême (9), à la surface extérieure de la partie centrale (7) du pli de corps (6) sur le talon respectif (4) ; une gomme intérieure (10) et une bande extérieure anti-abrasion (12) intégrées l'une à l'autre et rabattues autour de chaque partie latérale (8) du pli de corps (6) ; chaque partie latérale (8) du pli de corps (6) étant rabattue sensiblement à 360° autour du talon respectif 4 ; la partie extrême (9) de chaque partie latérale (8) du pli de corps (6) étant jointe à la partie centrale (7) du pli de corps (6) immédiatement au-dessus du talon respectif (4) ; et chaque bande anti-abrasion (12) comportant une seconde partie (22) s'étendant vers l'extérieur du talon respectif (4) et ayant une section d'épaisseur variable afin de compenser l'absence d'un bourrage de talon, caractérisé en ce que ladite seconde partie (22) de la bande anti-abrasion (12) est agencée en contact direct avec la partie latérale respective (8) du pli de corps (6).

2. Pneumatique selon la revendication 1, caractérisé en ce que chaque bande anti-abrasion (12) comporte en outre une première partie (21) ayant une épaisseur moyenne inférieure à celle de ladite seconde partie (22) ; la première partie (21) de chaque bande anti-abrasion (12) étant rabattue sensiblement sous la forme d'un U autour du talon respectif (4).

3. Pneumatique selon la revendication 2, caractérisé en ce que la première partie (21) de chaque bande anti-abrasion (12) est superposée sur une partie correspondante de la gomme intérieure (10).
